# EUROPEAN PATENT APPLICATION

(11) **EP 4 838 428 A1**
(43) Date of publication of application: **11.11.2026**
(21) Application number: 25305637.8
(22) Date of filing: 05.05.2025
(51) Int. Cl.: G06N 10/70, G06N 10/20

(54) **LOCAL DECODER FOR QUANTUM REPETITION CODE IN ONE DIMENSION USING TWO LINES OF QUBITS**

(71) Applicant: Institut National de Recherche en Informatique et en Automatique, 78150 Rocquencourt (FR)
(72) Inventor: PALETTA, Louis, 78150 LE-CHESNAY-ROCQUENCOURT (FR); MIRRAHIMI, Mazyar, 78150 LE-CHESNAY-ROCQUENCOURT (FR); VUILLOT, Christophe, 78150 LE-CHESNAY-ROCQUENCOURT (FR); LEVERRIER, Anthony, 78150 LE-CHESNAY-ROCQUENCOURT (FR)
(74) Representative: Vidon Brevets & Stratégie

(57) **Abstract**

A method of correcting errors in a repetition code protected quantum memory, a logical qubit of the memory being built with a plurality physical noise-biased qubits arranged on a first row of physical qubits and a second row of physical qubits parallel to the first row, forming a line of meshes each having a first diagonal in a common first direction and second diagonal in a common second direction, the method comprising successive homogenizing steps (A) of applying corrections on physical qubits of the plurality from two-line majority votes. Said method further comprises successive swapping steps (B, C) for a mesh diagonal chosen for a given swapping step between the first diagonal and the second diagonal, swapping physical qubits along the chosen mesh diagonal of meshes of the lattice, said successive swapping steps being interleaved with the successive homogenizing steps.

## Description

### Technical context

The invention lies in the field of quantum error correcting codes that protect information in a noisy quantum computer by delocalizing it.

Topological codes are a first known approach to realize a quantum memory with such an information delocalisation strategy. Local constraints are enforced on physical qubits placed on a finite dimensional lattice. The error correction mechanism then may consist in measuring local stabilizers that form a syndrome, and the observed syndrome is then fed to a global decoder in charge of identifying an error compatible with the syndrome that is likely in view of the measurement. Decoders however often suffer from the following caveats: the decoder may require access to the entire syndrome, and this strategy imposes important hardware capabilities. Further, extra redundancy in the syndrome may be needed to cope with measurement errors.

Cellular automaton decoders also known as local decoders are a second known approach. The stabilizer measurement sites are each equipped with an automaton that can perform a computation, communicate with its neighbours and apply a local correction on the state. These actions form a local transition rule, that can induce a macroscopic dynamic useful for error correction purposes. The automaton can work measurement free and it acts in a somehow homogeneous manner on all cells of a register, generating a global rule that updates cell states locally, i.e., based solely on the parity with their neighbours. A well-known example is Toom's rule that protects information stored in a 2D grid for a time exponential in the grid size.

Known quantum local decoders for repetition code or surface code fall into two main categories. The category of automata with a hierarchical structure, and the category of field based decoders where defects are interpreted as particles interacting with each other through a classical field.

Hierarchical constructions suffer from a low error threshold for εd and εm (each data qubit is flipped at each time step with probability εd and each stabilizer measurement result is flipped with probability εm), and from a poor effective distance *γₙ*, i.e. the minimal weight of error configuration leading to a logical failure. The distance of the repetition code is n, and the effective distance quantifies how well the local decoder performs compared to a global decoder.

In field-based decoders, on the other hand, the memory lifetime saturates above a certain system size, unless the communication speed keeps increasing.

Further, these known local decoders of the category of the hierarchical constructions and of the field-based decoders often use local memories, which are bulky and expensive. Thus solutions not relying on local memories are sought.

Known quantum memories based on a local decoder and not using local classical memories include a 2D memory using a square lattice and obtained by concatenating a cat code, ie a bosonic code tailored for protection against phase flips, and a 2D repetition code decoded by Toom's rule known from Lieu et al. (2024) Candidate for a passively protected quantum memory in two dimensions Physical Review Letters, 133(3), 030601.

Known quantum memories based on a local decoder and not using local classical memories also include a cat code concatenated with a (quasi-)one dimensional repetition code, equipped with a quantum cellular automata based on classical cellular-automata rules with local majority voting and two-line voting capabilities, without permutation of qubits known from Guedes et al. (2024) Quantum cellular automata for quantum error correction and density classification Physical Review Letters, 133(15), 150601. But the complexity of the algorithms and circuits used is high.

As is apparent from the above comment of the prior art, known technics require often classical memories or complicated circuits to be implemented and this complicates the logical operations between logical qubits.

### Features of the invention and associated advantages

To solve the problems of the prior art, the invention relates to a method of correcting errors in a repetition code protected quantum memory, a logical qubit of the memory being built with a plurality of physical noise-biased (also qualified biased noise) qubits arranged on a first row of physical qubits and a second row of physical qubits parallel to the first row, forming a line of meshes each having a first diagonal in a common first direction and second diagonal in a common second direction, the method comprising successive homogenizing steps of applying corrections on physical qubits of the plurality by from two-line majority votes. This two-line majority votes is the basis, in an embodiment, for an operation of flipping the examined qubit if it is in odd parity with two different neighbours, these two different neighbours being chosen according to the specific type of two-line majority voting used for the examined qubit (as detailed later in the text). Such an operation is a bit flip conditioned on parities as a correction is performed when a site is in -1 parity with both its neighbours.

In an original manner, said method further comprises successive swapping steps of, for a mesh diagonal chosen for a given swapping step between the first diagonal and the second diagonal, swapping physical qubits along the chosen mesh diagonal of meshes of the lattice, said successive swapping steps being interleaved with the successive homogenizing steps.

The swapping steps allow having high performance for small system sizes without classical memories.

The homogenizing steps and swapping steps together form one iteration of a permanent loop of correcting errors.

According to optional and advantageous features:
- the mesh diagonal chosen for a given swapping step may be alternatively the first diagonal once and then the second diagonal once; The one iteration of a permanent loop of correcting errors in that case may comprise, in one particular embodiment, two homogenizing steps interleaved with two swapping steps, one with the first diagonal and one with the second diagonal. In other embodiments, the homogenizing steps can be more numerous or less numerous than the swapping steps.
- each physical qubit of the first row may have a unique neighbour in the second row, and each physical qubit of the second row has a unique neighbour in the first row, and said two line majority votes for an examined physical qubit in a given row include taking into account a neighbour in the given row and the unique neighbour in the other row;
- said two line majority votes can include for an examined qubit in a given row taking into account only one neighbour of the examined qubit in the given row;
- said two line majority votes can include for examined qubits of the first row taking into account a neighbour in the first row in a given direction and for physical qubits of the second row taking into account a physical qubit of the second row in the same given direction - this is advantageous for a periodic lattice;
- or said two line majority votes includes for examined qubits of the first row taking into account a neighbour in the first row in a given direction and for physical qubits of the second row taking into account a physical qubit of the second row in the direction opposite to the given direction - this is advantageous for a non-periodic lattice.
- said corrections can be, for each examined qubit, a flip of the examined qubit when the examined qubit has a higher (or strictly higher) number of neighbours with which it is in odd parity than with which it is in even parity.

The invention is also embodied in a quantum memory setup comprising a memory composed of cat qubits and protected with a repetition code, wherein the setup further comprises local automatons or processors associated with physical qubits and configured to execute a decoder program implementing the steps of a method according to the features indicated above.

The autonomous quantum memory of the invention is built in quasi-1D and more precisely is obtained by concatenating a cat code and a quantum repetition code arranged on two adjacent lines of n/2 qubits possibly without classical memories.

The other technologies do not use qubit swap which results in a doubled complexity of the quantum circuit and the resulting loss of performance.

The proposed solution has significantly reduced quantum circuit complexity, making it of high interest.

It exhibits satisfactory dynamics but with reduced circuit practical complexity compared to the prior art resulting in improved performances. This automaton performs well for small system sizes and offers a practical advantage by eliminating the need for classical memory. As a result, it presents an appealing solution for the local decoding of the repetition code.

A non-limiting circuit implementation using a Toffoli gate for majority voting is proposed. In a specific embodiment it uses only one Toffoli gate per majority vote and uses no classical memory. It is advantageous to use only one Toffoli gate as, in practical physical implementations, three-qubit gates are likely to introduce the most errors. The Toffoli gate performs a quantum feedback on the examined qubit. Alternatively, the Toffoli gate is replaced by measurements of ancillary qubits to obtain outcomes of parity measurement, local classical processing of the parity measurement outcomes and classical feedback.

In a non-limiting circuit implementation swapping steps are each performed with a swap gate.

In an alternative non-limiting circuit implementation swapping steps are each performed with CNOT gates and an ancillary qubit to perform a parity computation, or with two ancillary qubits, an intermediate qubit of the code, and CNOT gates to compute parity on the two auxiliary qubits. Two alternative versions are implemented: with or without measurement of ancillary qubit to obtain outcome of parity measurement.

Depending on the versions used the feedbacks are classical or quantum feedbacks.

For the sake of completeness, it is mentioned that the wording bit flip is somehow a convention, opposed to the wording phase flip, and that the two can be interchanged, with the biased noise protecting possibly, in another convention, against bit flips, and phase flips thus needing to be corrected by the repetition code.

### List of figures

Figure 1 shows an aspect of a first embodiment of the invention.
Figures 2A and 2B show steps of a method according to two different embodiments of the invention.
Figure 3 and 4 show implementation possibilities used in some embodiments.
Figure 5 shows a scenario in which the invention is used.
Figures 6 and 7 each show steps of a method according to further embodiments of the invention.

### Description in relation with the figures - embodiments

Embodiments of a local decoder for the quantum repetition code under Pauli X errors are presented herebelow. Each of these embodiments can be combined with biased-noise qubits, in particular with cat qubits, to yield a quantum memory. An X error is a bit-flip error.

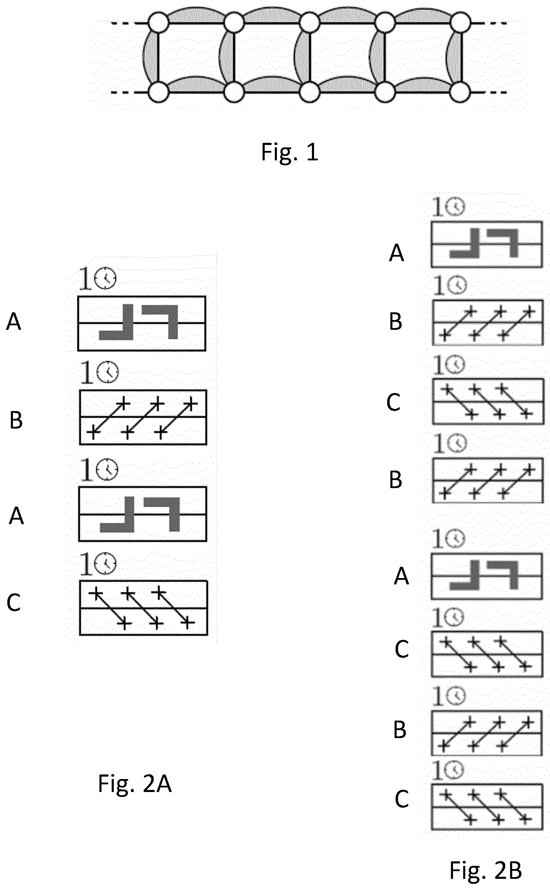

[Fig. 1] A cellular automaton decoder according to an embodiment of the invention is defined on two concentric cycles of qubits. Figure 1 is a representation of a two-row periodic lattice, used in an embodiment of the invention. If n is an even integer, and the number of qubits is n, the periodic lattice is Z2 x Zn/2.

Qubits are assigned to the vertices of the lattice, and Z-type stabilizers (ZZ parities check) to the edges of the lattice.

Thus the mesh of the lattice is a square, or a rectangular, or even a parallelogram. Each qubit has three neighbours. Neighbours are labelled with cardinal points. Qubits on the upper row have West, and East neighbours on the same row and a South neighbour in the lower row, and qubits on the lower row have West and East neighbours in the same row and a North neighbour in the upper row. Each row is periodic by itself, making the lattice periodic.

The local automaton is capable of measuring the parity between two neighbouring qubits and applies a correction on an examined qubit in case of parity -1 with two distinct neighbours of the examined qubit.

The local automaton is also capable of swapping qubits. Elementary operations used in the automaton indeed include qubit permutations:
- on one diagonal between South-West and North-East,
- on the second diagonal between North-East and South-West.

Further elementary operations used in the automaton include three qubits majority votes. These majority votes are organized in the following manner, and depicted on the figure from left to right:
- for an examined qubit of the lower row, majority vote with West and North neighbouring qubits
- and for an examined qubit of the upper row, majority vote with West and South neighbouring qubits
Or
- for an examined qubit of the lower row, majority vote with North and East neighbouring qubits
- and for an examined qubit of the upper row, majority vote with South and East neighbouring qubits.

The above combinations are advantageous if the lattice is cyclic ie periodic, and thus finite.

The following combinations are also available, for three qubits majority votes.
- for an examined qubit of the lower row, majority vote with West and North neighbouring qubits
- and for an examined qubit of the upper row, majority vote with South and East neighbouring qubits.
Or
- for an examined qubit of the lower row, majority vote with North and East neighbouring qubits
- and for an examined qubit of the upper row, majority vote with West and South neighbouring qubits.

These combinations are advantageous if the lattice is non-periodic.

In all these majority votes, two minus 1 (-1) parities in a majority vote cause an X correction on the examined qubit.

[Fig. 2A] Figure 2A is a schematic representation of the temporal pattern of the rule of the automaton according to the invention.

The operations are taken from the operations discussed above. The grey edges indicate the orientation of the three qubits majority vote.

The automaton transition rule is defined by three operations, the first one being used twice in a cycle
- Operation A:
   ∘ On left of the sketch : majority vote with West and North neighbours for the qubits of the bottom row causing an X-type correction for qubits of the bottom row in odd parity with these neighbours
   ∘ and on the right of the sketch : majority vote with West and South neighbours for the qubits of the top row causing an X-type correction for qubits of the top row in odd parity with these neighbours,
- Operation B: Swapping (ie permuting) qubits in the diagonal South-West to North-East
- Operation C: Swapping (ie permuting) qubits in the diagonal South-East to North West.

The rule of transition is 4-periodic and is defined by the successive application of rule A at time t=0 then rule B at time t=1 then rule A again at time t=2 and then rule C at time t=3. Thus the automaton consists of the repeated sequential application of these rules in the indicated order.

[Fig. 2B] In another embodiment shown on figure 2B, the rule of transition is 8 periodic, and is defined by the successive application of rule A at time t=0 then rule B at time t=1 then rule C at time t=2 then rule B again at time t=3, then rule A at time t=4 then rule C at time t=5, then rule B at time t=6 and finally rule C at time t=7. The automaton consists of the repeated sequential application of these rules in the indicated order.

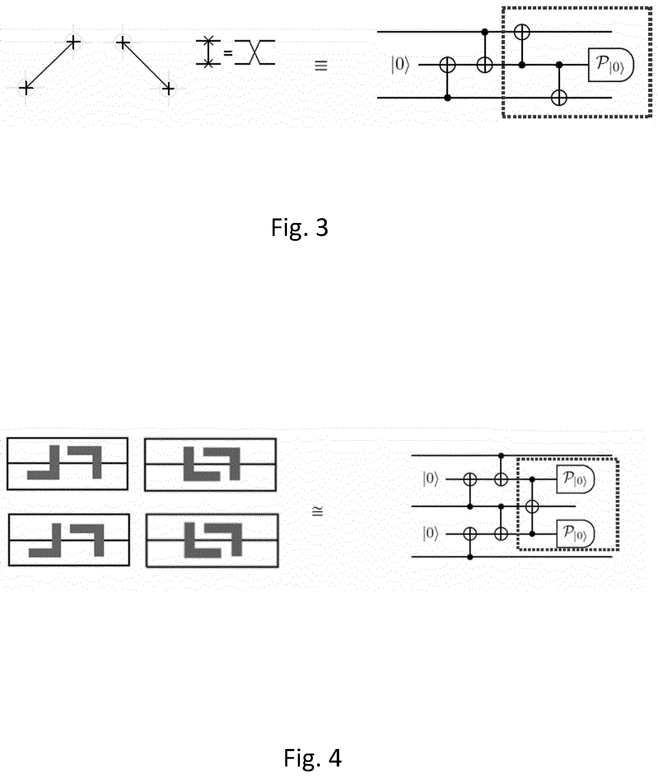

[Fig. 3] As shown on figure 3, the permutation of two qubits for the repetition code is performed via a SWAP gate (shown in the middle) or by a parity determination (the parity is computed on an ancillary qubit) followed by an XX correction conditioned on a -1 outcome (shown on the right).

Whatever the embodiment used, the complete circuit allows the following operations, as shown on the left part of figure 3:
- swapping on one diagonal between South-West and North-East,
- and swapping on the second diagonal between North-East and South-West.

The circuit shown on the right part of the figure 3 performing, as mentioned above, the parity determination followed by an XX correction, is a circuit equivalent to a SWAP gate but using one additional qubit (an ancillary qubit), placed between qubits to be swapped. It uses two CNOT gates between each of the qubits to be swapped and the ancillary qubit - thus total four gates - in the order and manner shown on the figure from left to right, and is finished by a reset of the ancillary qubit. The parity of the two physical qubits to swap is computed on the ancillary qubit by the first two CNOT gates. This computed parity is then used to perform the XX correction.

For a rectangular mesh, this embodiment uses an ancillary qubit placed on a diagonal of the rectangle.

But as explained below, a further embodiment uses two ancillary qubits to perform a swapping step, said ancillary qubits being placed on vertical and horizontal edges of the lattice. This further embodiment will be mentioned after a circuit for majority vote is first described. The further embodiment does not use ancillary qubits on diagonals.

[Fig. 4] As shown on figure 4 concerning majority votes, the majority votes are performed in an embodiment by a circuit comprising a Toffoli gate involved in a feedback process followed by resets of associated ancillary qubits. The circuit shown on the right part of the figure 4 is a circuit using indeed two additional qubits (two ancillary qubits), each placed between two neighbours, ie on a vertical or horizontal edge of the lattice. It uses four CNOT gates between the qubit to be examined (placed in the middle line), the two neighbours (placed in the upper and lower lines) and the two ancillary qubits. The gates are performed in the order and in the manner shown on the figure from left to right, and the operation is finished by a Toffoli gate between the examined qubit and the two ancillary qubits in the manner shown on the figure and then the reset of the two ancillary qubits. The parity of the two physical qubits on a vertical edge is computed on a first ancillary qubit placed on a vertical edge by two CNOT gates. The parity of the two physical qubits on a horizontal edge is also computed on a second ancillary qubit placed on a vertical edge by two other CNOT gates. Then the examined qubit and the two ancillary qubits are used by a Toffoli gate modifying the examined qubit. This is a majority flip without measurement.

Thus this circuit implementation uses one Toffoli gate per majority vote. This solution is implemented without classical memory,

The Toffoli count is crucial because, in practical physical implementations, three-qubit gates are likely to introduce the most errors. Thus using only one Toffoli gate per majority vote is advantageous.

Notably, the disclosed construction requires only half as many Toffoli gates per site per correction step compared to the prior art.

Further, no qubit measurement is performed (in figure 3 and in figure 4), which allows the circuit to operate very fast.

Eventually the circuit of figure 3 and figure 4 are easy to integrate as only quantum circuits are used.

### Resetting the auxiliary qubits only when necessary

The majority vote operation and the swap operation in the embodiment of figure 2A can be performed one after the other with two ancillary qubits each placed between two neighbours, ie on a vertical or horizontal edge of the lattice as on the circuit of figure 4 without resetting ancillary qubits in between. This embodiment uses resets of ancillary qubits only every two operations, these two operations including a majority vote and a swap.

This is advantageous when the two steps (majority vote and swap) are performed with measurement of ancillary qubits and feedback, as explained below. The same parity determinations (parity computing on the ancillary qubits) are used for both the swapping step and the majority vote step, using in that case a variation of the circuit of figure 4 that performs both swapping and majority vote steps.

### Embodiments using measurement of ancillary qubits and classical feedback 1^{st} solution

The circuits enclosed by the dotted lines in figure 3 and figure 4 can anyway (even if both these circuits are used) be replaced by measurement of ancillary qubits - ie the circuit uses parity measurement outcomes - and feedback.

In both figure 3 and figure 4, after the first two CNOT gates, the ancillary qubits each take the value of the parity of the two qubits connected by the considered CNOT gate.

From this moment a measurement of the ancillary qubit returns one classical bit of information - the parity measurement outcome - that is stored on a transistor or an equivalent device and a classic circuit calculates whether or not a correction has to be applied, using, for the majority vote step, an AND gate between the information - two parity measurement outcomes - read from the two ancillary qubits (for the swapping step the indication is direct as only one ancillary qubit is used - there is thus only one parity measurement outcome).

### 2^{nd} solution

If only the circuit with the ancillary qubits on the horizontal and vertical edges is used, the swapping and majority vote can also be performed by applying a correction based on parity measurement outcomes. If b is the examined qubit, with a and c its neighbours for the majority vote and a and c being subject to the swapping operation,
- for the majority vote, b has to be flipped if both the parity between a and b and the parity between b and c are equal to -1 (AND gate),
- and the swap of a and c is equivalent to a flip of a and a flip of c if and only if the *product* of the parities of a and b and of b and c is equal to -1.

An embodiment uses only resets of the ancillary qubits only at the end of the two steps. The effect of the majority vote is further taken into account for the swapping step. In this case, as mentioned above; the ancillary qubits are reset only every two operations, these two operations including a majority vote and a swap.

### Performance investigation

The logical performance of the automaton is investigated numerically in the phenomenological noise model with measurement and data errors for step A and data errors at steps B and C. The practical performance is assessed by fitting εL with an ansatz of the form *An*(*B_{ε}*)*^{γn}*, where the exponent γn is allowed to depend on n. For small system sizes, numerical simulations show that the decoder of the present invention outperforms Toom's rule.

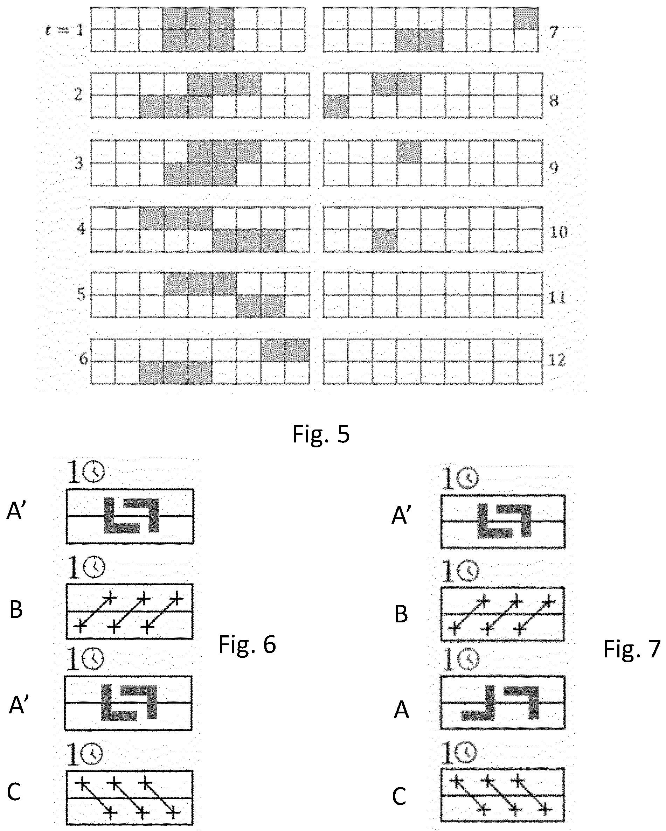

[Fig. 5] Figure 5 shows a scenario with three successive cycles from t=1 to t=12. The lattice is cyclic and has 9 columns.

At the beginning of the scenario (t=1) a group of six errors exists and forms a 2x3 rectangle.

A first cycle begins.

After performing a step B (swap along SW/NE diagonal - t=2), six errors are still present: three adjacent errors on the upper row, and three adjacent errors on the lower row, spread over 5 columns, with two adjacent errors in the middle column. Visually, the group of errors of the upper row has shifted by one cell to the East while the group of errors of the lower row has shifted by one cell to the West.

After performing a step A (majority vote - t=3), six errors are still present: three adjacent errors on the upper row, and three adjacent errors on the lower row, spread over 4 columns, with two pairs of two adjacent errors in the two middle columns. Visually, the group of errors of the lower row has shifted by one cell to the East and the group of errors of the upper row has not moved.

After performing a step C (swap along NW/SE diagonal - - t=4), six errors are still present: three adjacent errors on the upper row, and three adjacent errors on the lower row, spread over 6 columns, with no adjacent errors in any column. Visually, the group of errors of the upper row has shifted by two cells to the West and the group of errors of the lower row has shifted by two cells to the East.

After performing a step A (majority vote - t=5), five errors are still present: three adjacent errors on the upper row, and two adjacent errors on the lower row, spread over 5 columns, with no adjacent errors in any column. Visually, the group of errors of the upper row has shifted by one cell to the East and the two most eastern errors of the group of errors of the lower row have not moved. One error has disappeared during this majority vote.

A second cycle begins.

After performing a step B (swap along SW/NE diagonal - t=6), five errors are still present: two adjacent errors on the upper row, and three adjacent errors on the lower row, spread over 7 columns, with two adjacent columns with no errors inside the pattern. Visually, the group of errors of the upper row has shifted by one cell to the West and migrated to the lower row while the group of errors of the lower row has shifted by one cell to the East and migrated to the upper row.

After performing a step A (majority vote - t=7), three errors are present: two adjacent errors on the lower row, and a single adjacent errors on the upper row, spread over 6 columns, with three adjacent columns with no errors inside the pattern. Visually, the two most eastern errors of the group of errors of the lower row have not moved, the most eastern error of the group of errors of the upper row has not moved and two errors have disappeared during this majority vote.

After performing a step C (swap along NW/SE diagonal - t=8), three errors are still present: two adjacent errors on the upper row, and one single error on the lower row, spread over 4 columns, with no adjacent errors in any column. Visually, the group of errors of the lower row has shifted by one cell to the West and migrated to the lower row and the single error of the upper row has shifted by one cell to the East (the lattice is periodic) and migrated to the lower row.

After performing a step A (majority vote - t=9), only one error is still present. Visually, the eastern most error of the group of errors of the upper row has not moved. The two other errors have disappeared during this majority vote.

A third cycle begins.

After performing a step B (swap along SW/NE diagonal - t=10), only one error is still present. It is located in the lower row.

After performing a step A (majority vote - t=11), the last error has disappeared during this majority vote.

[Fig. 6] In a second embodiment shown on figure 6, the orientation of the majority vote of step A is changed on the bottom row and the lattice is a non-periodic lattice.

Thus step A is changed in step A':
- Operation A':
   ∘ On left of the sketch : Majority vote with East and North neighbours for the qubits of the bottom row causing an X-type correction for qubits of the bottom row in odd parity with these neighbours
   ∘ and on the right of the sketch : majority vote with West and South neighbours for the qubits of the top row causing an X-type correction for qubits of the top row in odd parity with these neighbours.

The rule of transition is 4-periodic and is defined by the successive application of rule A' at time t=0 then rule B at time t=1 then rule A' again at time t=2 and then rule C at time t=3. Thus the automaton consists of the repeated sequential application of these rules in the indicated order. Each of the two lines of qubits is non-periodic. The use of step A' is useful to adapt to non-periodic boundary conditions. In this case the orientation of the majority vote shown in the Figure 6 describes the treatment of the bulk of the lattice and at each extremity of the lattice each majority vote is performed with the two only possible neighbours of the examined qubit.

[Fig. 7] In a third exemplary embodiment shown on figure 7,

The rule of transition is 4-periodic and is defined by the successive application of rule A' at time t=0 then rule B at time t=1 then rule A again at time t=2 and then rule C at time t=3. Thus the automaton consists of the repeated sequential application of these rules in the indicated order.

## Claims

1. A method of correcting errors in a repetition code protected quantum memory, a logical qubit of the memory being built with a plurality of physical noise-biased qubits arranged on a first row of physical qubits and a second row of physical qubits parallel to the first row, forming a line of meshes each having a first diagonal in a common first direction and second diagonal in a common second direction, the method comprising successive homogenizing steps (A; A') of applying corrections on physical qubits of the plurality from two-line majority votes, **characterized in that** said method further comprises successive swapping steps (B, C) of, for a mesh diagonal chosen for a given swapping step between the first diagonal and the second diagonal, swapping physical qubits along the chosen mesh diagonal of meshes of the lattice, said successive swapping steps being interleaved with the successive homogenizing steps.

2. A method of correcting errors according to claim 1, **characterized in that** the mesh diagonal chosen for a given swapping step (B, C) is alternatively the first diagonal once and then the second diagonal once.

3. A method of correcting errors according to claim 1 or claim 2, **characterized in that** each physical qubit of the first row has a unique neighbour in the second row, and each physical qubit of the second row has a unique neighbour in the first row, and said two line majority votes for an examined physical qubit in a given row include taking into account a neighbour in the given row and the unique neighbour in the other row.

4. A method of correcting errors according to any of claims 1 to 3, **characterized in that** said two line majority votes include for an examined qubit in a given row taking into account only one neighbour of the examined qubit in the given row.

5. A method of correcting errors according to any of claims 1 to 4, **characterized in that** said two line majority votes used in said homogenizing steps (A) include for examined qubits of the first row taking into account a neighbour in the first row in a given direction and for physical qubits of the second row taking into account a physical qubit of the second row in the same given direction.

6. A method of correcting errors according to any of claims 1 to 4, **characterized in that** said two line majority votes used in said homogenizing steps (A') include for examined qubits of the first row taking into account a neighbour in the first row in a given direction and for physical qubits of the second row taking into account a physical qubit of the second row in the direction opposite to the given direction.

7. A method of correcting errors according to any of claims 1 to 4, **characterized in that** said corrections are, for each examined qubit, a flip of the examined qubit when the examined qubit has a higher number of neighbours with which it is in odd parity than with which it is in even parity.

8. A quantum memory setup comprising a memory composed of cat qubits and protected with a repetition code, wherein the setup further comprises local automatons or processors associated with physical qubits and configured to execute a decoder program implementing the steps of a method according to any of claims 1 to 7.

9. A quantum memory setup according to claim 8 wherein majority voting is performed with a Toffoli gate or with measurements of ancillary qubits and classical feedback.

10. A quantum memory setup according to claim 8 or claim 9 wherein swapping steps are each performed with a swap gate or with one ancillary qubit and CNOT gates to compute parity on the auxiliary qubit, or with two ancillary qubits, an intermediate qubit of the code, and CNOT gates to compute parity on the two auxiliary qubits.
